# EUROPÄISCHE PATENTSCHRIFT

(11) **EP 2 405 170 B1**
(45) Veröffentlichungstag und Bekanntmachung des Hinweises auf die Patenterteilung: **13.08.2014**
(21) Anmeldenummer: 11004271.0
(22) Anmeldetag: 24.05.2011
(51) Int. Cl.: F16L 5/08, H02G 3/22

(54) **Vorrichtung zum Durchführen wenigstens einer Leitung und Wanddurchführungssystem für wenigstens eine Leitung**
Device for guiding through at least one conduit and wall feed through system for at least one conduit
Dispositif de passage d'au moins une conduite et système de passage mural pour au moins une conduite

(30) Priorität: 05.07.2010 DE 102010026082
(43) Veröffentlichungstag der Anmeldung: 11.01.2012
(73) Patentinhaber: gabo Systemtechnik GmbH, 94559 Niederwinkling (DE)
(72) Erfinder: Geiger, Alexander, 94559 Niederwinkling (DE); Lederer, Roland, 94374 Schwarzbach (DE); Karl, Markus, 94327 Bogen (DE)
(74) Vertreter: Schmid, Nils T.F.

(56) Entgegenhaltungen:
- DE-B4-102004 009 849
- DE-C- 869 888
- US-A- 3 278 201
- US-A- 5 542 714

## Beschreibung

Die Erfindung betrifft eine Vorrichtung zum Durchführen wenigstens einer Leitung, wie eines Kabels, eines Kabelschutzrohres, einer Gasleitung oder dergleichen, insbesondere durch einen vorgefertigten Wanddurchgang, wie eine Durchgangsbohrung, vorzugsweise in einer Gebäudeaußenwand. Eine solche auch als Mauerdurchführung bekannte Vorrichtung dient dazu, eine kontrollierte Ein- und Ausführung der Leitung in die Wandbohrung und wieder heraus bereitzustellen, wobei außerdem der Wanddurchgang gegen das Eindringen von Feuchtigkeit und Wasser abgedichtet sein soll.

Eine Vorrichtung der gattungsgemäßen, die sich in den letzten Jahren erfolgreich bewährt hat, ist aus DE 10 2004 009 849 B4 bekannt. Die Abdichtvorrichtung zur Durchführung von Kabeln oder Kabelschutzrohren umfasst eine Kanalstruktur, welche die wenigstens eine Leitung schützend aufnehmen soll, und welche in den Wanddurchgang einzusetzen ist. An der Kanalstruktur ist eine Montageanlageplatte befestigt, an der ein Bogenabschnitt zum geführten Umleiten der Leitung aus dem Wanddurchgang heraus anschließt. Der Bogenschnitt, die Anlagenplatte sowie der in den Wanddurchgang eingesetzte Abschnitt der Kanalstruktur sind aus einem Stück gefertigt. Die Kanalstruktur hat zwei separate Kanäle, nämlich einen Leitungskanal sowie einen Spannstangenkanal.

Eine Spannplatte oder Abstützabschnitt der Kanalstruktur ist an dem von der Wandaußenseite abgewandten Ende der Abdichtvorrichtung angeordnet, wobei zwischen der Spannplatte und der Anlagenplatte wenigstens ein Dichtungsabschnitt lose angeordnet ist. Die Dichtfunktion der Abdichtvorrichtung wird dadurch erreicht, dass die Spannplatte und die Montageplatte mittels der Betätigung einer Spannstange aufeinander zu bewegt werden, und ein Montagezwischenraum, in dem der Dichtungsabschnitt lose liegt, verkleinert wird. Dadurch wird der Dichtungsabschnitt komprimiert und weicht radial nach außen aus, um eine Dichtungsfläche an der Innenseite des Wanddurchgangs zu bilden.

US 3 278 201 A offenbart einen selbsteinstellenden Abgleichrahmen zum Stützen von Rohren an der Stelle, an der sie sich durch eine Wand erstrecken.

Es ist Aufgabe der Erfindung, die Vorrichtung zum Durchführen von wenigstens einer Leitung durch einen Durchgang einer Wand dahingehend zu verbessern, dass deren Montage unabhängig von dem Verlauf des Wanddurchgangs in einer Wand auch für ein ungeübtes Personal einfach montierbar ist.

Diese Aufgabe wird durch die Merkmale von Patentanspruch 1 gelöst.

Danach ist eine Vorrichtung zum Durchführen wenigstens einer Leitung, wie eines Kabels, eines Kabelschutzrohres, beispielsweise eines Leerrohres, einer Gasleitung, etc., durch einen Durchgang, insbesondere durch eine Wand hindurch mit einer Kanalstruktur versehen, die in den Wanddurchgang einzusetzen ist. Die Kanalstruktur wird also überwiegend innerhalb des Wanddurchgangs liegen und definiert im Wesentlichen eine Längsrichtung, die parallel zur Axialrichtung des geradlinigen Durchgangs liegt. In der Kanalstruktur wird die zu verlegende Leitung eingesetzt. Die erfindungsgemäße Vorrichtung oder Abdichtführung zur Durchführung wenigstens einer Leitung hat weiterhin wenigstens einen kompressiblen Dichtungsabschnitt mit einem aktiven Dichtzustand und einem passiven Montagezustand. Vorzugsweise sind nur ein Dichtungsabschnitt und zwei hintereinander in Längsrichtung versetzt angeordnete Dichtungsabschnitte vorgesehen, die identisch dimensioniert sind. Der Dichtungsabschnitt hat vorzugsweise eine zylindrische Außenseite, die mit mehreren umlaufenden Dichtlippen ausgebildet sein kann.

Die erfindungsgemäße Vorrichtung hat außerdem eine Spanneinrichtung, wie eine Spannstange mit einem Schnellspannbetätigungsglied, das bei deren Betätigung den wenigstens einen Dichtungsabschnitt in den Dichtzustand versetzt, in dem der Dichtungsabschnitt den Wanddurchgang abdichtet, indem an der Innenseite des Wanddurchgangs eine umlaufende Dichtfläche gebildet ist. Der Dichtungsabschnitt ist zwischen zwei aufeinander zu bewegbaren Kanalstrukturabschnitten, von denen einer nahe der Wandaußenseite und der andere fern der Wandaußenseite liegt, lose angeordnet, so dass bei einer Aufeinanderzubewegung der beiden beweglichen Kanalstrukturabschnitte mittels Betätigung der Spannstange der wenigstens eine Dichtungsabschnitt zusammengedrückt wird, wodurch er radial nach außen ausweicht und die umlaufende Dichtfläche mit der Innenseite des Wanddurchgangs bildet.

Die erfindungsgemäße Vorrichtung hat des Weiteren eine Montageanlageplatte zum Festlegen der Einsetzposition der Kanalstruktur in Axialrichtung des Durchgangs. Die Montageanlageplatte begrenzt die Einsetzbewegung in Axialrichtung in den Durchgang, wenn die Montageanlageplatte in anliegenden Anschlag mit der Wandaußenseite benachbart des Durchgangs gelangt. Erfindungsgemäß ist die Montageanlageplatte an der Kanalstruktur derart beweglich angelenkt, dass mehrere Winkelstellungen zwischen der Montageanlageplatte und der Kanalstruktur eingenommen werden können. Die Kanalstruktur erstreckt sich vorzugsweise geradlinig und insbesondere lotrecht zur Montageanlageplatte, die eine flache Ebene definiert. Aufgrund der Gelenkverbindung zwischen der Montageanlageplatte und der Kanalstruktur kann die Längsrichtung der Kanalstruktur verschiedenste Winkel zur Montageanlageplatte neben der üblichen Lotrechte einnehmen. Auf diese Weise können auch bei zur Wandaußenseite schräg verlaufenden Wanddurchgängen ohne Weiteres die Dichtvorrichtung eingesetzt werden und einerseits eine kontrollierte Ein- und Ausführung der Leitung sichergestellt werden, wobei andererseits eine sichere Abdichtung des Wanddurchgangs gewährleistet ist.

Bei einer bevorzugten Ausführung der Erfindung ist die für die bewegliche Anlenkung der Montageendplatte an der Kanalstruktur verantwortliche Gelenkverbindung als ein Schwenkgelenk ausgeführt, die wenigstens eine zur Kanalstruktur ortsfeste Schwenkachse, vorzugsweise genau eine zur Kanalstruktur ortsfeste Schwenkachse aufweist. Dabei verläuft die Schwenkachse quer, vorzugsweise senkrecht zur Längsrichtung der Kanalstruktur.

Das Schwenkgelenk kann zwei insbesondere sich diametral gegenüber liegende Gelenkzapfen aufweisen, die drehbar jeweils in einer Gelenkaufnahme, insbesondere Gelenkpfanne, gelagert sind. Es sei klar, dass auch die Gelenkzapfen an sich diametral gegenüberliegenden Positionen angeordnet sein können. Vorzugsweise sind die beiden Gelenkzapfen an der Kanalstruktur geformt, während die Gelenkpfannen an der Montageanlageplatte ausgebildet sind.

Bei einer bevorzugten Ausführung der Erfindung sind beide Gelenkzapfen und/oder beide Gelenkpfannen unterschiedlich dimensioniert und/oder geformt, so dass eine Anordnung des jeweiligen Gelenkzapfens nur in einer bestimmten Gelenkpfanne und nicht in der anderen möglich ist. Auf diese Weise wird auch ein ungeübtes Bedienpersonal angehalten, stets die richtige Gelenkzapfen- /Gelenkpfannenzuordnung zu verwenden, um die Montageendplatte an die Kanalstruktur vor dem Einbau in den Wanddurchgang zu montieren.

Bei einer bevorzugten Ausführung der Erfindung hat die Gelenkverbindung einen Bajonettverschluss mit zwei Verschlusszapfen, die in deren Verschlussposition als deren Gelenkzapfen in einer Gelenkaufnahme schwenkbeweglich aufgenommen sind.

Bei einer Weiterbildung der Erfindung hat die Montageanlageplatte eine der Wand zuzuwendende plane Anlagefläche, die derart gestaltet ist, dass sie in der Einsetzposition der Kanalstruktur zumindest teilweise flächig an der Wand anliegt. Vorzugsweise kann die Anlagefläche formkomplementär zum Wandbereich geformt sein, der benachbart des Wanddurchgangs liegt.

Bei einer Weiterbildung der Erfindung hat die Montageanlageplatte einen von der Wand abgewandten Führungsbogen, der eine geführte bogenförmige Umleitung der Leitung führt, wobei die Führung nur abschnittsweise an der der Wand zugewandten Seite der Leitung realisiert ist. Damit ist der Führungsbogen an der von Wand abgewandten Seite offen.

Bei einer Weiterbildung der Erfindung umfasst die Kanalstruktur wenigstens einen Leitungskanal, der sich insbesondere geradlinig längs der gesamten Kanalstruktur hindurch erstreckt, und einen Spannstangenkanal zur Aufnahme einer Spannstange, der sich insbesondere geradlinig längs der Kanalstruktur hindurch erstreckt.

Vorzugsweise hat die Kanalstruktur einen montageanlageplattenseitigen Basisabschnitt, der insbesondere im Montagezustand der Kanalstruktur bzw. der Vorrichtung aus dem Wanddurchgang vorzugsweise geringfügig herausragt und insbesondere an dessen montageanlageplattenseitigen Ende sich die Spanneinrichtung abstützt. Der Basisabschnitt ist vorzugsweise ortsfest bezüglich des Wanddurchgangs und ortsfest bezüglich der Axialrichtung gegenüber der Montageanlageplatte montiert. Des Weiteren hat die Kanalstruktur einen von der Montageanlageplatte abgewandten Mitnahmeabschnitt, der relativ zu dem Basisabschnitt beweglich gelagert ist. Der Dichtungsabschnitt ist zwischen dem Basisabschnitt und dem Mitnahmeabschnitt der Kanalstruktur derart lose angeordnet, dass bei Betätigung der Spanneinrichtung, insbesondere der Spannstange, die sich durch den Spannstangenkanal erstreckt, der Dichtungsabschnitt unter Ausbildung einer an der Innenseite des Wanddurchgangs anliegenden voll umlaufenden Dichtfläche zusammengedrückt wird. Die Spanneinrichtung kann durch einen Schnellspannmechanismus gebildet sein. Die Kanalstruktur kann gegebenenfalls auch einen Zwischenabschnitt aufweisen, der zur Eingliederung eines weiteren Dichtungsabschnitts zwischen dem Basisabschnitt und dem Mitnahmeabschnitt dient. Sowohl der Zwischenabschnitt als auch der Mitnahmeabschnitt sind auch beweglich relativ zum Basisabschnitt gelagert. Im Übrigen sind der Zwischenabschnitt und der Mitnahmeabschnitt der Kanalstruktur auch zueinander beweglich gelagert. Alle Abschnitte der Kanalstruktur, der Basisabschnitt, der Mitnahmeabschnitt und gegebenenfalls der Zwischenabschnitt haben Kanalbereiche für die Bildung des Leitungskanals und des Spannstangenkanals, die jeweils miteinander fluchtend axial ausgerichtet angeordnet sind.

Des Weiteren betrifft die Erfindung ein System zur paarweisen Anordnung einer nach einem der vorstehenden Ansprüche ausgebildeten Vorrichtung, wobei eine Vorrichtung an dem einem Ende des Durchgangs und die andere Vorrichtung an dem gegenüberliegenden Ende des Durchgangs eingesetzt ist.

Weitere Eigenschaften, Vorteile und Merkmale der Erfindung werden durch die folgende Beschreibung einer bevorzugten Ausführung anhand der beiliegenden Zeichnungen erläutert, in denen zeigen:
- Figur 1: eine perspektivische einer erfindungsgemäßen Durchführvorrichtung;
- Figur 2: eine Seitenansicht der Durchführvorrichtung nach Figur 1;
- Figur 3: eine Querschnittsansicht der Durchführvorrichtung entlang der Schnittlinie III-III nach Figur 2;
- Figur 4: eine Draufsicht einer Montageanlageplatte der Durchführvorrichtung gemäß den Figuren 1 und 3;
- Figur 5: eine Seitenansicht eines Basisabschnitts einer Kanalstruktur der Durchführvorrichtung gemäß den Figuren 1 bis 3; und
- Figur 6: eine Teilquerschnittsansicht eines erfindungsgemäßen Wanddurchführungssystems für Kabel.

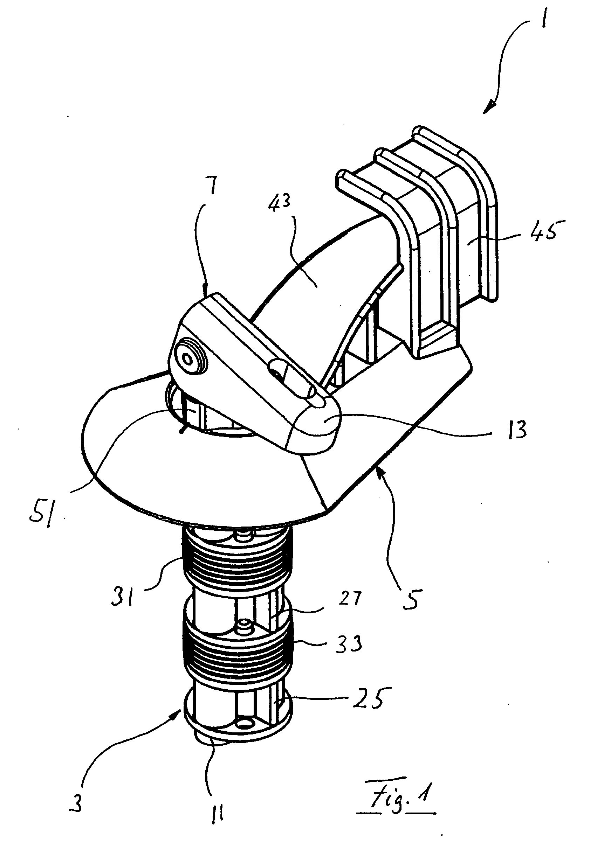

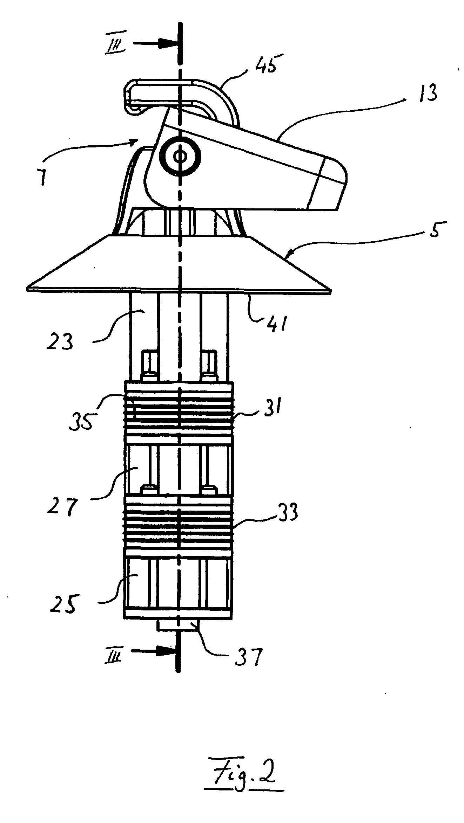

In den Figuren 1 bis 3 ist eine erfindungsgemäße Wanddurchgangsabdichtvorrichtung im Allgemeinen mit der Bezugsziffer 1 versehen.

Die Abdichtvorrichtung umfasst im Wesentlichen drei Hauptbestandteile, nämlich: eine Kanalstruktur 3, eine Montageanlageplatte 5 und einen Spannmechanismus 7, der aus einer Spannstange 11 und einem Schnellspanner gebildet ist.

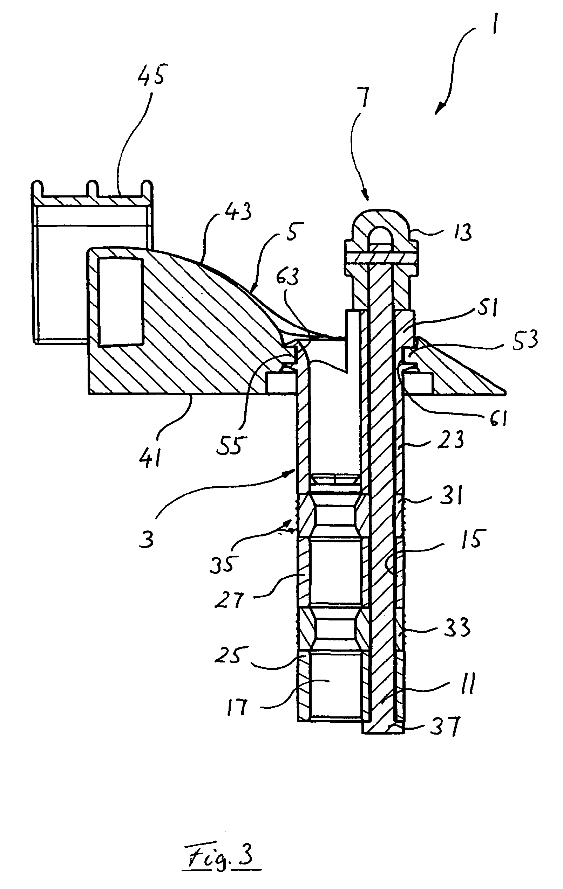

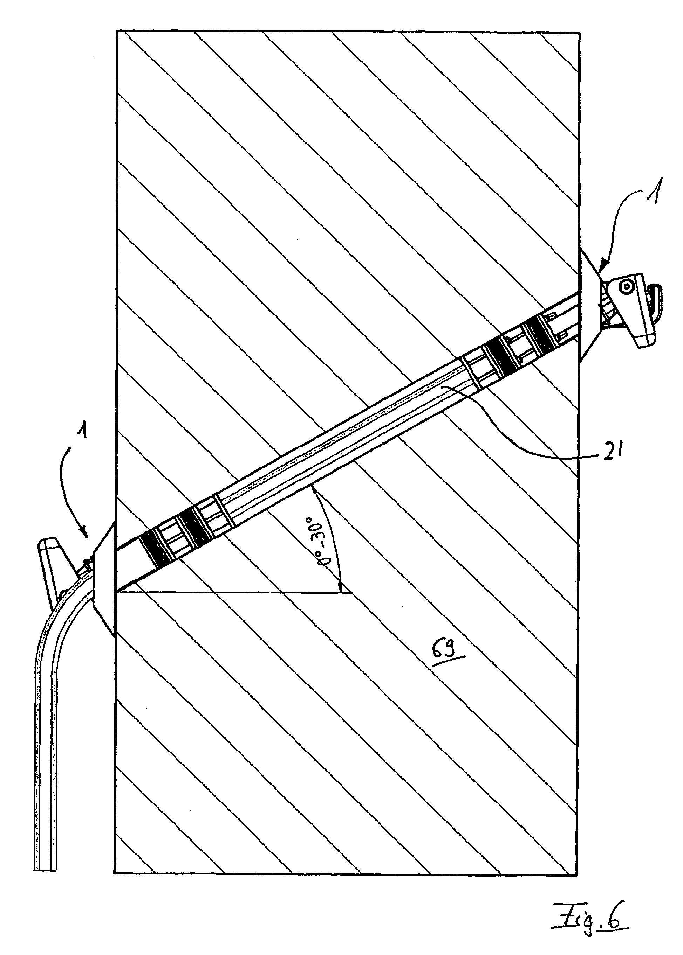

Die Kanalstruktur 3, wie in Figur 3 ersichtlich ist, hat zwei Durchgangskanäle, nämlich einen Spannstangenkanal 15 und einen Leitungskanal 17, in dem eine Schutzrohr 21 oder ein Kabel hindurch geführt sein kann, wie in Figur 6 ersichtlich ist.

Die Kanalstruktur hat einen Basisabschnitt 23, einen Mitnahmeabschnitt 25 sowie einen Zwischenabschnitt 27, der zwischen dem Basisabschnitt 23 und dem Mitnahmeabschnitt 25 angeordnet ist.

Während der Basisabschnitt im Wanddurchgang montierten Zustand (Figur 6) relativ zum Wanddurchgang ortsfest liegt, können der Zwischenabschnitt 27 und der Mitnahmeabschnitt 25 in Längsrichtung des Wanddurchgangs aufeinander von einander weg bewegt werden, wobei der Mitnahmeabschnitt 25 sowie der Zwischenabschnitt 27 an der Spannstange 11 in Axialrichtung geführt gelagert sind.

Wie in Figur 3 ersichtlich ist, umfasst jeder der Abschnitte 23 bis 27 einen Abschnitt zur Bildung sowohl des Spannstangenkanals 15 als auch des Leitungskanals 17.

Zwischen dem Basisabschnitt 23 und dem Zwischenabschnitt 27 sowie zwischen dem Zwischenabschnitt 27 und dem Mitnahmeabschnitt 25 ist jeweils ein an der Außenseite zylindrischer Dichtungsabschnitt in Form einer Elastomerhülse angeordnet, die jeweils einen Kanalabschnitt für den Spannstangenkanal 15 als auch den Leitungskanal 17 aufweist. Im montierten Zustand fluchten alle Abschnitte zur Bildung der jeweiligen Durchgangskanäle der Kanalstruktur 3. Der montageanlagenplattenseitige Dichtungsabschnitt 31 sowie auch der von der Montageanlageplatte abgewandte Dichtungsabschnitt 33 sind formidentisch ausgeführt und haben an der zylindrischen Außenseite mehrere Dichtlippen 35.

Bei Betätigung des Schnellspanners 13 zieht die Exzentrizität des Schnellspanners den Mitnahmekopf 37 der Spannstange 11 auf die Montageanlageplatte 5 zu, wobei sich der Schnellspanner 13 an der Oberseite des Basisabschnitts 23 abstützt. Dabei wird der Mitnahmeabschnitt 25 auf den Basisabschnitt 23 zu bewegt, wodurch auch der Zwischenabschnitt 27 mitgenommen wird. Dabei werden die Dichtungsabschnitte 31, 33 derart zusammengedrückt, dass das Elastomermaterial der Dichtungsabschnitte radial ausweicht, um mit der zylindrischen Innenseite des Wanddurchgangs eine voll umlaufende Dichtfläche zu bilden.

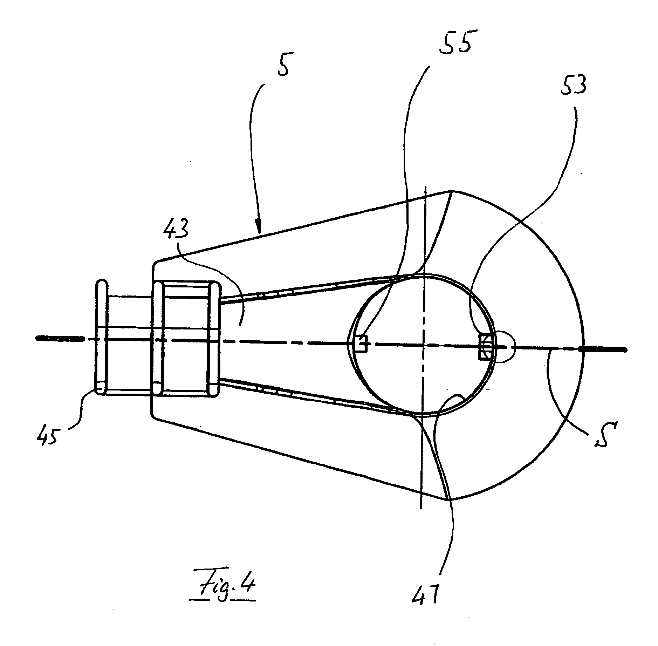

Die Montageanlageplatte 5, die insbesondere in Figur 4 im Detail dargestellt ist, hat eine plane Anlagefläche 41, welche zur Anschlagsanlage mit der Außenseite der Wand benachbart des Wanddurchgangs kommt. Auf diese Weise ist die Einsetzposition der Abdichtvorrichtung 1 in dem Wanddurchgang in Axialrichtung begrenzt, was in Figur 6 ersichtlich ist.

Die Montageanlageplatte hat an der Wand angewandten Seite ein Bogenprofil 43, das an der von der Wand abgewandten Seite offen ist und eine kontrollierte umgebogene Leitung der Leitung außerhalb des Wanddurchgangs als Führung stützt. Aufgrund der Rückstellkräfte der elastisch verformten Leitung ist ein Haltekragen 45 am Ende des Führungsbogens 43 vorgesehen, der teilweise den Bogenabschnitt 43 übergreift.

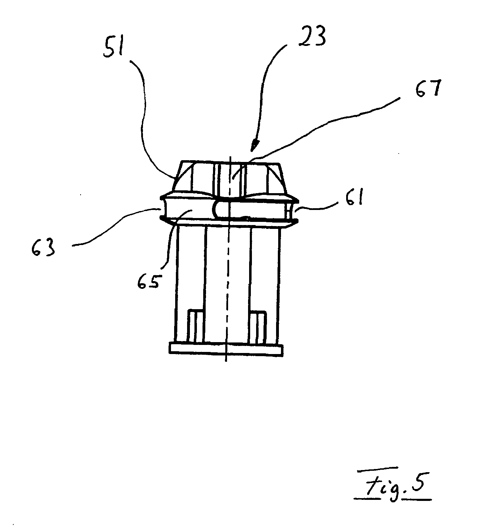

Wie in Figur 4 ersichtlich ist, hat die Montageanlageplatte 5 eine Hauptöffnung 47, in die das Kopfende 51 des Basisabschnitts 23 (Figur 5) ragen soll. Am Kopfende 51 stützt sich der Schnellspannmechanismus 13 ab.

An der im Wesentlichen kreisförmigen Innenseite der Hauptöffnung 47 sind zwei diametral gegenüberliegende Gelenkzapfen 53, 55 vorgesehen, die sich radial nach innen erstrecken, wobei der Gelenkzapfen 53 größer dimensioniert ist, als der Gelenkzapfen 55, um eine falsche Ausrichtung der Gelenkzapfen und damit der Montageanlageplatte 5 zu vermeiden. Die sich gegenüberliegenden Gelenkzapfen 53, 55 liegen auf einer Symmetrieachse der Montageanlageplatte 5, die sich parallel zur Längserstreckung des Bogenabschnitts 43 erstreckt. Die Symmetrieachse bildet eine Schwenkachse S, welche durch die Gelenkzapfen 53, 55 definiert ist.

Die Gelenkzapfen 53, 55 wirken mit formkomplementären Gelenkpfannen 61, 63 zusammen, die am Kopfende 51 des Basisabschnitts 23 ausgebildet sind.

Die Gelenkpfannen 61, 63 bilden das Ende einer Bajonettverschlussrille 65. Um einen Bajonettverschluss zwischen der Montageanlageplatte 5 und dem Basisabschnitt 23 der Kanalstruktur 3 zu realisieren, werden die Gelenkzapfen 53, 55, die gleichzeitig Verschlusszapfen bilden, über zwei sich gegenüberliegende vertikale Einführnuten 67 in die Bajonettverschlussrille 65 eingeführt und anschließend so lange verdreht (um 90°), bis die Gelenkzapfen 53, 55 in der dazu passenden Gelenkpfanne 61, 63 aufgenommen ist. Aufgrund der Gelenkzapfen(53, 55)- Gelenkpfannen(61, 63)-Gelenkverbindung kann eine Schwenkbewegung der Montageanlageplatte 5 gegenüber dem Basisabschnitt 23 in einem Schwenkwinkelumfang von bis zu 100°, vorzugsweise 90°, insbesondere 60°, erreicht werden. Auf diese Weise ist es möglich, eine einfache Montage der Abdichtvorrichtung 1 auch in zur Außenwandseite schräg geführte Durchgangsbohrungen, wie sie in Figur 6 dargestellt sind, zu realisieren, wobei weiterhin die Dichtigkeit erreichbar ist. Aufgrund der Schwenkbarkeit der Montageanlageplatte 5 gegenüber dem Basisabschnitt 23 bleibt die gerade Abstützfläche des Kopfendes 51 des Basisabschnitts 23 gegenüber dem Schnellspannmechanismus 13 stets unverändert. Auch bei schrägen Bohrungen kann eine ausreichende Dichtigkeit des Wanddurchgangs erreicht werden.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Wanddurchgangsabdichtvorrichtung
- 3: Kanalstruktur
- 5: Montageanlagenplatte
- 7: Spannmechanismus
- 11: Spannstange
- 13: Schnellspanner
- 15: Spannstangenkanal
- 17: Leitungskanal
- 21: Schutzrohr
- 23: Basisabschnitt
- 25: Mitnahmeabschnitt
- 27: Zwischenabschnitt
- 31, 33: Dichtungsabschnitt
- 35: Dichtlippen
- 37: Mitnahmekopf
- 43: Bogenprofil
- 45: Anlagefläche
- 47: Hauptöffnung
- 51: Kopfende
- 53, 55: Gelenkzapfen
- 61, 63: Gelenkpfannen
- 65: Bajonettverschluss
- 67: vertikale Einführnut
- 69: Wand

- S: Schwenkachse

## Patentansprüche

1. Vorrichtung zum Durchführen wenigstens einer Leitung, wie eines Kabels, eines Kabelschutzrohres, einer Gasleitung, durch einen Durchgang insbesondere einer Wand hindurch umfassend: eine die Leitung aufnehmende Kanalstruktur (3) zum Einsetzen in den Durchgang, die wenigstens einen kompressiblen Dichtungsabschnitt (31, 33) mit einem aktiven Dichtzustand und einem passiven Montagezustand aufweist, eine Spanneinrichtung, durch die der Dichtungsabschnitt (31, 33) zum Abdichten gegen die Innenseite des Durchgangs in den Dichtzustand versetzt werden kann, und eine Montageanlageplatte (5) zum Festlegen der Einsetzposition der Kanalstruktur (3) in Axialrichtung des Durchgangs, **dadurch gekennzeichnet, dass** die Montageanlageplatte (5) durch eine Gelenkverbindung an der Kanalstruktur (3) derart gekoppelt ist, dass mehrere Winkelstellungen zwischen der Montageanlageplatte (5) und der Kanalstruktur (3) einnehmbar sind.

2. Vorrichtung nach Anspruch 1, **dadurch gekennzeichnet, dass** die Gelenkverbindung ein Schwenkgelenk mit wenigstens einer zur Kanalstruktur (3) ortsfesten Schwenkachse (S), vorzugsweise genau einer zur Kanalstruktur (3) ortsfesten Schwenkachse (S), aufweist.

3. Vorrichtung nach Anspruch 2, **dadurch gekennzeichnet, dass** das Schwenkgelenk zwei sich insbesondere diametral gegenüberliegende Gelenkzapfen (53, 55) aufweist, die drehbar jeweils in einer Gelenkaufnahme, insbesondere Gelenkpfanne (61, 63), gelagert sind, wobei insbesondere beide Gelenkzapfen (53, 55) und/oder beide Gelenkpfannen (61, 63) unterschiedlich dimensioniert sind, so dass eine Anordnung des jeweiligen Gelenkzapfens (53, 55) nur in einer bestimmten Gelenkpfanne (61, 63) ermöglicht ist.

4. Vorrichtung nach einem der vorstehenden Ansprüche, **dadurch gekennzeichnet, dass** die Gelenkverbindung einen Bajonettverschluss (65) mit zwei Verschlusszapfen aufweist, die insbesondere in deren Verschlussposition als Gelenkzapfen (53, 55) in einer Gelenkaufnahme schwenkbeweglich aufgenommen sind.

5. Vorrichtung nach einem der vorstehenden Ansprüche, **dadurch gekennzeichnet, dass** die Montageanlageplatte (5) eine der Wand zuzuwendende plane Anlagefläche aufweist, die derart gestaltet ist, dass sie in der Einsetzposition der Kanalstruktur (3) zumindest teilweise flächig an der Wand anliegt, und/oder einen von der Wand abgewandt offenen Führungsbogen aufweist, entlang dem die Leitung nach dem Austreten aus der Kanalstruktur (3) gebogen ist.

6. Vorrichtung nach einem der vorstehenden Ansprüche, **dadurch gekennzeichnet, dass** die Kanalstruktur (3) wenigstens einen Leitungskanal (17), der sich insbesondere geradlinig längs der gesamten Kanalstruktur (3) hindurch erstreckt, und einen Spannstangenkanal (15) zur Aufnahme einer Spannstange (11), der sich insbesondere geradlinig längs der gesamten Kanalstruktur (3) hindurch erstreckt, und/oder die Kanalstruktur (3) einen montageanlageplattenseitigen Basisabschnitt (23), der insbesondere in Montagezustand der Kanalstruktur (3) aus dem Wanddurchgang vorzugsweise geringfügig heraus ragt und insbesondere an dessen montageanlageplattenseitigen Ende sich die Spanneinrichtung einerseits abstützt, einen von der Montageanlageplatte (5) abgewandten Mitnahmeabschnitt (25), der bezüglich dem Basisabschnitt (23) beweglich gehalten ist, wobei insbesondere der Dichtungsabschnitt (31, 33) zwischen dem Basisabschnitt (23) und dem Mitnahmeabschnitt (25) derart angeordnet ist, dass bei Betätigung der Spanneinrichtung, die insbesondere durch einen Schnellspannmechanismus gebildet ist, der Dichtungsabschnitt (31, 33) unter Ausbildung einer an der Innenseite des Wanddurchgangs anliegenden vollumlaufenden Dichtfläche zusammengedrückt wird, und gegebenenfalls einen Zwischenabschnitt (27) aufweist, der zur Eingliederung eines weiteren Dichtungsabschnitts (31, 33) zwischen dem Basisabschnitt (23) und dem Mitnahmeabschnitt (25) angeordnet ist, wobei insbesondere alle Abschnitte wenigstens einen Leitungskanal (17) und einen Spannstangenkanal (15) umfassen, die jeweils miteinander fluchtend axial ausgerichtet angeordnet sind.

7. System zum Abdichten eines Durchgangs, insbesondere einer Wand, mit zwei sich gegenüberliegenden Durchgangsenden, umfassend ein Paar nach einem der vorstehenden Ansprüche ausgebildete Vorrichtungen, von denen eine an dem einen Durchgangsende und die andere Vorrichtung am anderen Durchgangsende angeordnet ist.

## Claims

1. A device for the passing of at least one service line, such as a cable, a cable protection tube, or a gas line, through a passage, in particular through a wall, comprising: a duct structure (3) accommodating the service line for purposes of insertion into the passage, which has at least one compressible sealing section (31, 33) with an active sealing state and a passive assembly state, a tensioning device, by means of which the sealing section (31, 33) can be moved into the sealing state for purposes of sealing against the inner surface of the passage, and a seating assembly plate (5) for purposes of defining the insertion position of the duct structure (3) in the axial direction of the passage, **characterised in that**, the seating assembly plate (5) is coupled to the duct structure (3) by means of an articulation such that a plurality of angular positions can be taken up between the seating assembly plate (5) and the duct structure (3).

2. The device according to claim 1, **characterised in that**, the articulation has a swivel joint with at least one swivel axis (S) that is fixed in position relative to the duct structure (3), preferably exactly one swivel axis (S) that is fixed in position relative to the duct structure (3).

3. The device according to claim 2, **characterised in that**, the swivel joint has two joint pins (53, 55), which are mounted such that each can rotate in a seating on the joint, in particular a socket (61, 63), wherein in particular the two joint pins (53, 55) and/or the two sockets (61, 63) have different dimensions, so that an arrangement of the joint pin (53, 55) in question is only possible in one particular socket (61, 63).

4. The device according to any one of the preceding claims, **characterised in that**, the articulation has a bayonet coupling (65) with two coupling pins, which in particular in their coupling position are accommodated such that they can swivel as joint pins (53, 55) in a seating on the joint.

5. The device according to any one of the preceding claims, **characterised in that**, the seating assembly plate (5) has a planar seating surface facing towards the wall, which is configured such that in the insertion position of the duct structure (3) it rests at least in part flat against the wall, and/or has an open guide curve facing away from the wall, along which the service line is curved after emerging from the duct structure (3).

6. The device according to any one of the preceding claims, **characterised in that**, the duct structure (3) has at least one service line duct (17) which in particular extends in a straight line through the whole of the duct structure (3), and a tensioning rod duct (15) for purposes of accommodating a tensioning rod (11), which in particular extends in a straight line through the whole of the duct structure (3), and/or the duct structure (3) has a base section (23) on the seating assembly plate side, which in particular in the assembled state of the duct structure (3) preferably protrudes slightly from the wall passage, and in particular on its seating assembly plate side end supports the tensioning device on one side, a slave section (25) facing away from the seating assembly plate (5), which is held such that it can move relative to the base section (23), wherein in particular the sealing section (31, 33) is arranged between the base section (23) and the slave section (25) such that with an actuation of the tensioning device, which in particular is generated by means of a rapid clamping mechanism, the sealing section (31, 33) is compressed so as to form a full peripheral sealing surface fitting closely on the inner surface of the passage, and if required has an intermediate section (27), which is arranged for purposes of introducing a further sealing section (31, 33) between the base section (23) and the slave section (25), wherein in particular all sections comprise at least one service line duct (17) and a tensioning rod duct (15), which in each case are arranged such that they are axially aligned with one another.

7. A system for purposes of sealing a passage, in particular through a wall, with two opposing passage ends, comprising a pair of devices designed according to any one of the preceding claims, of which one is arranged at one of the passage ends, and the other device is arranged at the other passage end.

## Revendications

1. Dispositif pour faire passer au moins une conduite, telle un câble, une gaine de protection de câble, une conduite de gaz, à travers un passage, en particulier d'une paroi, comprenant : une structure de canal (3) réceptionnant la conduite pour la mise en place dans le passage, laquelle présente au moins une partie d'étanchéification compressible (31, 33) avec un état d'étanchéification actif et un état de montage passif, un dispositif de serrage grâce auquel il est possible de faire passer la partie d'étanchéification (31, 33) à l'état d'étanchéification contre le côté intérieur du passage pour l'étanchéification, et une plaque d'installation de montage (5) pour fixer la position de mise en place de la structure de canal (3) en direction axiale du passage, **caractérisé en ce que** la plaque d'installation de montage (5) est couplée, grâce à un assemblage articulé, avec la structure de canal (3) de manière à ce que plusieurs positions angulaires entre la plaque d'installation de montage (5) et la structure de canal (3) peuvent être adoptées.

2. Dispositif selon la revendication 1, **caractérisé en ce que** l'assemblage articulé présente une articulation pivotante avec au moins un axe de pivotement (S) stationnaire par rapport à la structure de canal (3), de préférence une articulation pivotante (S) précisément stationnaire par rapport à la structure de canal (3).

3. Dispositif selon la revendication 2, **caractérisé en ce que** l'articulation pivotante présente deux pivots (53, 55) situés en particulier de manière diamétralement opposée, lesquels sont respectivement logés de manière rotative dans un logement articulé, en particulier un coussinet à rotule (61, 63), moyennant quoi en particulier les deux pivots (53, 55) et/ou les deux coussinets à rotule (61, 63) sont dimensionnés de manière différente de sorte qu'il est seulement possible d'agencer un pivot respectif (53, 55) dans un coussinet à rotule (61, 63) déterminé.

4. Dispositif selon l'une des revendications précédentes, **caractérisé en ce que** l'assemblage articulé présente une fermeture à baïonnette (65) avec deux tenons de fermeture lesquels, en particulier dans leur position de fermeture, sont réceptionnés de manière à se mouvoir en pivotant en tant que pivots (53, 55) dans un logement articulé.

5. Dispositif selon l'une des revendications précédentes, **caractérisé en ce que** la plaque d'installation de montage (5) présente une surface d'appui plane tournée vers la paroi, laquelle est conçue de manière à reposer au moins partiellement à plat contre la paroi dans la position de mise en place de la structure de canal (3) et/ou présente un arceau de guidage ouvert tournant le dos à la paroi, le long duquel la conduite est cintrée après la sortie de la structure de canal (3).

6. Dispositif selon l'une des revendications précédentes, **caractérisé en ce que** la structure de canal (3) présente au moins un canal de conduite (17), lequel s'étend en particulier en ligne droite le long de l'ensemble de la structure de canal (3) à travers celle-ci, et un canal de tirant (15) pour la réception d'un tirant (11), lequel s'étend de préférence le long de l'ensemble de la structure de canal (3) en ligne droite à travers celle-ci, et/ou en ce que la structure de canal (3) présente une partie de base (23) du côté de la plaque d'installation de montage laquelle, en particulier à l'état de montage de la structure de canal (3), dépasse de préférence légèrement du passage de la paroi et à l'extrémité du côté de la plaque d'installation de montage de laquelle le dispositif de serrage est en appui d'un côté, une partie d'entraînement (25) tournant le dos à la plaque d'installation de montage (5), laquelle est maintenue de manière mobile par rapport à la partie de base (23), moyennant quoi en particulier la partie d'étanchéification (31, 33) est disposée entre la partie de base (23) et la partie d'entraînement (25) de manière à ce qu'en cas d'actionnement du dispositif de serrage, lequel est en particulier formé par un mécanisme de serrage rapide, la partie d'étanchéification (31, 33) est comprimée en formant une surface d'étanchéification sur le périmètre complet reposant contre le côté intérieur du passage de la paroi, et présente le cas échéant une partie intermédiaire (27) qui est disposée pour l'insertion d'une autre partie d'étanchéification (31, 33) entre la partie de base (23) et la partie d'entraînement (25), moyennant quoi toutes les parties comprennent en particulier au moins un canal de conduite (17) et un canal de tirant (15), lesquels sont respectivement disposés en alignement l'un avec l'autre de manière orientée axialement.

7. Système pour rendre étanche un passage, en particulier d'une paroi, avec deux extrémités de passage situées en vis-à-vis, comprenant une paire de dispositifs réalisés selon l'une des revendications précédentes, l'un d'entre eux étant disposé à l'une des extrémités de passage et l'autre dispositif étant disposé à l'autre extrémité de passage.
